# FASCICULE DE BREVET EUROPEEN

(11) **EP 2 123 444 B1**
(45) Date de publication et mention de la délivrance du brevet: **21.06.2017**
(21) Numéro de dépôt: 09006593.9
(22) Date de dépôt: 15.05.2009
(51) Int. Cl.: B32B 7/12, B32B 27/30, B32B 37/12, B32B 15/04, B32B 15/20, B32B 27/06, B32B 27/18, B32B 27/32, B32B 29/00, B32B 37/20, C08L 53/02, C09J 153/02, B32B 37/15

(54) **Film multicouche pour emballage flexible**
Mehrschichtfolie für flexible Verpackungen
Multilayer film for flexible packaging

(30) Priorité: 22.05.2008 FR 0802773
(43) Date de publication de la demande: 25.11.2009
(73) Titulaire: BOSTIK SA, 93210 La Plaine Saint Denis (FR)
(72) Inventeur: Robert, Christophe, 60150 Thourotte (FR); Chartrel, Jean-François, 60400 Cuts (FR)
(74) Mandataire: Chahine, Audrey Claire

(56) Documents cités:
- WO-A-99/20709
- WO-A-99/28048
- WO-A-02/064694
- WO-A-2005/099911
- WO-A-2006/107763
- US-A- 5 719 226

## Description

La présente invention a pour objet un film multicouche (ou complexe), utilisable notamment dans le domaine de l'emballage flexible, qui comprend au moins 2 couches minces de matériaux liées entre elles par une couche d'une composition adhésive à base d'un copolymère bloc styrénique. Elle concerne également un procédé de complexage adapté à la fabrication dudit film.

Les emballages flexibles destinés au conditionnement des produits les plus divers, tels ceux fabriqués par les industries agroalimentaire, cosmétique ou de la détergence, sont généralement constitués de plusieurs couches minces ou substrats (sous forme de feuilles ou de films) dont l'épaisseur est comprise entre 5 et 150 µm et qui sont constituées de différents matériaux comme le papier, l'aluminium ou les polymères thermoplastiques tels que le polyéthylène (ou PE), le polypropylène (ou PP), orienté ou non, les copolymères d'éthylène et d'acétate de vinyle (ou EVA). Le film multicouche correspondant, dont l'épaisseur peut varier de 20 à 400 µm, permet de combiner les propriétés des différentes couches individuelles de matériau et d'offrir ainsi au consommateur un ensemble de caractéristiques adaptées à l'emballage souple final comme par exemple : son apparence visuelle (notamment celle des éléments imprimés présentant l'information concernant le produit emballé et destinée au consommateur), un effet de barrière à l'humidité atmosphérique ou à l'oxygène, un contact alimentaire sans risque de toxicité ou de modification des propriétés organoleptiques des aliments emballés, une résistance chimique pour certains produits tels que le ketchup ou le savon liquide, une bonne tenue à température élevée (par exemple en cas de stérilisation) ou au contraire très basse (surgélation). Pour constituer l'emballage final, le film multicouche est généralement mis en forme par thermoscellage, à une température variant d'environ 120 à 250 °C, cette dernière technique étant également utilisée pour la fermeture de l'emballage autour du produit destiné au consommateur.

Les diverses couches de matériau qui composent le film multicouche sont combinées ou assemblées par contrecollage au cours d'une opération de fabrication dénommée complexage (également désignée en anglais par "lamination") qui met en oeuvre des colles et des dispositifs ou machines conçus à cet effet. Le film multicouche ainsi obtenu est souvent lui-même qualifié par les termes de complexe ou composite (ou encore par le terme "laminé").

Les films multicouches utilisables pour la fabrication d'emballages flexibles sont généralement porteurs, au moins sur une partie de leur surface, d'éléments imprimés qui présentent l'information concernant le produit emballé. Ces éléments imprimés résultent du dépôt de diverses encres, par un procédé d'impression, sur l'une des couches minces, qui est constituée par un matériau transparent, préalablement à l'opération de complexage. Celle-ci est alors conduite de manière à ce que dans le film multicouche final, ledit dépôt soit en contact avec l'adhésif, les éléments imprimés étant ainsi protégés du milieu extérieur par la couche mince transparente.

Les colles de complexage peuvent parfois se présenter dans la pratique industrielle sous la forme de colles à base aqueuse (par exemple de type caséine ou acrylique) mais sont très généralement des compositions adhésives de type polyuréthanne.

Ces dernières colles sont mises en oeuvre par les industriels spécialisés dans le complexage (souvent appelés complexeurs) dans des machines qui fonctionnent en continu avec des vitesses de ligne généralement élevées et dans lesquelles tant les films constituant les couches individuelles que le film complexe final sont, en raison de leurs très grandes dimensions, conditionnés par enroulement sous forme de larges bobines dont la largeur (ou laize) peut aller jusqu'à environ 2 m et le diamètre jusqu'à 1,80 m. La bobine de film composite final, sur lequel sont en général imprimés les éléments d'information du futur emballage, est souvent dénommée bobine mère.

Les procédés de complexage généralement mis en oeuvre industriellement avec les colles de type polyuréthanne comprennent tout d'abord une étape d'enduction de la colle sur un premier film de matériau, qui consiste en un dépôt sur la totalité de sa surface d'une couche de colle continue et d'épaisseur contrôlée, correspondant à une quantité de colle (ou grammage) également contrôlée. Cette étape d'enduction est suivie d'une étape de contrecollage d'un deuxième film de matériau, identique ou différent du premier, consistant en l'application sous pression de ce deuxième film sur le premier film recouvert de la couche de colle.

Dans l'étape d'enduction, la couche continue de colle est déposée, à une température variant selon le cas depuis la température ambiante jusqu'à une centaine de degrés, au terme d'un transfert qui résulte de la mise en contact sous pression d'un rouleau en rotation, préalablement chargé en colle, avec le film de matériau à enduire. Dans l'étape de contrecollage, la pression nécessaire à l'application du deuxième film sur le film enduit de colle est généralement exercée par le passage des films correspondants entre 2 rouleaux. Les étapes d'enduction et de contrecollage sont mises en oeuvre en continu sur une même installation de complexage.

Le complexe ainsi obtenu comprend généralement une quantité de colle de type polyuréthane inférieure à 10 g/m² (correspondant à une couche continue d'épaisseur ne dépassant pas environ 10 µm) et généralement inférieure à 5 g/m². Les films complexes fabriqués selon ce type de procédé conviennent bien à la fabrication d'emballage souple en raison de leur excellente cohésion. Cette cohésion est également maintenue durant la mise en forme du film pour confectionner l'emballage souple, notamment après thermoscellage. De plus, la très faible épaisseur de cette couche d'adhésif permet avantageusement de maintenir le caractère souple et souvent transparent des films de matériaux nécessaire à la confection des emballages flexibles.

L'opération de complexage proprement dite est très souvent suivie par une opération de découpe du film composite qui est également réalisée par le complexeur, de manière à générer, à partir d'une bobine mère, plusieurs bobines filles de plus faible largeur, comprise par exemple entre 10 cm et 1 m.

Ces bobines filles sont destinées à être transportées et livrées aux divers industriels clients des complexeurs, qui les mettent en oeuvre directement sur leurs chaînes de conditionnement pour procéder à l'emballage de leurs propres produits, par exemple agroalimentaires, cosmétiques ou détergents, et destinés, notamment, au consommateur.

Les procédés de complexage industriel en continu utilisant les colles de type polyuréthanne permettent avantageusement une productivité élevée, allant jusqu'à des vitesses de production de film composite en ligne de 450 m/minute, voire plus.

Les colles de complexage de type polyuréthanne rencontrées dans la pratique sont historiquement à base de solvant et se présentent sous la forme de systèmes dits "bicomposant" ou "monocomposant".

Les systèmes "bicomposant" sont fournis au complexeur sous la forme de 2 solutions organiques contenant des entités chimiques qui sont généralement, au moins pour l'une des 2 solutions, des polymères polyuréthanes ou polyesters (de poids moléculaire d'environ 1000 à 30000 Da), l'autre solution pouvant contenir de simples molécules. Ces entités chimiques sont porteurs pour l'une des solutions, de groupements terminaux isocyanates, et, pour l'autre solution, de groupements terminaux hydroxyles. Le mélange des 2 solutions est réalisé par les complexeurs préalablement à la mise en route de la machine de complexage. Au cours du fonctionnement de la machine, après enduction du mélange ainsi obtenu et avant contrecollage, le solvant est évaporé. A l'issue de ces étapes d'évaporation et de contrecollage, les groupements isocyanates de l'une des entités réagissent sur les groupements hydroxyle de l'autre entité, selon une réaction dite de réticulation, pour former un réseau tridimensionnel à liaisons uréthanes qui assure la cohésion de la jonction entre les 2 couches minces contrecollées. Le temps requis pour compléter cette réaction de réticulation est toutefois très important, de l'ordre de 3 à 7 jours pour assurer la cohésion requise.

Les systèmes "monocomposant" sont fournis au complexeur sous la forme d'une seule solution organique contenant un polymère polyuréthanne à groupements terminaux isocyanates de poids moléculaire d'environ 10 à 30 kDa. La cohésion de la couche adhésive (ou jonction) entre les 2 couches minces de matériau contrecollées est atteinte après achèvement d'un réseau tridimensionnel à liaison uréthanne et/ou urée résultant d'une réaction de réticulation entre les groupements terminaux isocyanates et l'eau qui est présente sous forme d'humidité atmosphérique ou encore d'humidité dans le matériau des couches à assembler. Dans ce cas également, le temps requis pour compléter cette réaction de réticulation est très important, et de l'ordre de 3 à 7 jours pour assurer la cohésion requise.

Une amélioration de ce procédé de complexage résulte de la suppression de l'étape d'évaporation du solvant, qui est rendue possible par l'utilisation de colles de type polyuréthanne sans solvant.

Ces colles sont des polyuréthanes de masse moléculaire comprise entre environ 1 et 20 kDa.

Ce type de colle, comme le précédent, peut se présenter sous la forme de systèmes "bicomposant" ou "monocomposant". Dans les 2 cas, après dépôt de la colle sur la couche mince de matériau à enduire et contrecollage avec la deuxième couche mince de matériau, la cohésion de la jonction entre les 2 couches nécessite encore l'achèvement d'un réseau tridimensionnel (à liaisons uréthannes et urées) qui résulte d'une réaction de réticulation entre des groupements terminaux isocyanates et hydroxyles. Pour ce type de colle encore, le temps requis pour compléter cette réaction de réticulation est très important, pouvant aller jusqu'à 2 semaines dans le cas des colles de type polyuréthanne sans solvant bi-composant.

L'importance du temps de réticulation associé avec les colles de type polyuréthanne entraîne des inconvénients relatifs à l'organisation de la production industrielle des complexeurs. Il est ainsi nécessaire de disposer d' espaces de stockage pour la conservation des bobines mères de film composite soit à température ambiante, soit à une température au-dessus de l'ambiante, durant un temps de plusieurs jours à 2 semaines, nécessaire à l'achèvement de la réticulation. A cet inconvénient, s'ajoute celui de devoir attendre l'achèvement au moins partiel de la réaction de réticulation pour pouvoir reprendre les bobines mères et les transformer par découpe en bobines filles.

Un autre inconvénient des colles de type polyuréthanne concerne l'utilisation des films composites complexés par leur intermédiaire pour la réalisation d'emballages souples destinés aux produits alimentaires. Ce type de colles peut en effet renfermer certaines quantités de petites molécules aromatiques à groupement diisocyanate, qui proviennent des monomères non réagis lors de la fabrication des polyuréthannes. Ces petites molécules sont susceptibles de migrer à travers les couches de l'emballage souple et de venir au contact des produits alimentaires pour réagir avec l'humidité contenue dans ces derniers et former des amines primaires aromatiques bien connues pour leurs risques toxicologiques pour la santé. Pour maîtriser ce risque, on maintient en-dessous d'une certaine limite supérieure d'innocuité, fixée par certaines législations, la quantité de ces amines, qui est évaluée par des tests pratiqués dans des conditions standards. Ces tests sont mis en oeuvre tant durant la mise au point de la colle au laboratoire que, de façon ponctuelle, sur des échantillons du produit fabriqué industriellement. La présence d'amines primaires aromatiques peut être totalement évitée en utilisant des polyuréthanes obtenus à partir de monomères diisocyanates aliphatiques, mais dans ce cas la réticulation de la colle nécessite une durée particulièrement élevé, jusqu'à 7 ou 10 jours, et doit s'effectuer à une température supérieure à la température ambiante.

Des colles autres que celles de type polyuréthanne, et des procédés les mettant en oeuvre ont été proposés, dans le but de fabriquer des films complexes (ou multicouches).

La demande WO 02/064694 décrit ainsi un film thermoplastique tricouche comprenant une couche d'épaisseur 20 µm constituée d'une composition adhésive qui comprend un copolymère à blocs polystyrène et polyisoprène, ainsi qu'une résine tackifiante. Ce film tricouche est obligatoirement fabriqué par co-extrusion soufflage de gaine, la couche adhésive permettant la fabrication d'emballages à ouvertures et refermetures faciles du type "repositionnable". Un tel film complexe ne convient pas toutefois, du fait de son procédé de fabrication, à la présence d'éléments imprimés présentant l'information concernant le produit emballé. Il ne permet pas en effet d'obtenir, sur la face d'une couche mince transparente, un dépôt d'encres qui soit en contact avec la couche adhésive.

La demande internationale WO 96/25902 décrit par ailleurs un procédé d'enduction tendant au dépôt sur un premier substrat d'une couche substantiellement continue d'une composition thermoplastique à l'état fondu, en particulier d'un adhésif thermofusible, qui permet l'application de très bas grammages de cette composition, par exemple inférieurs à 10 g/m². Ce procédé d'enduction est notamment mis en oeuvre pour complexer un second susbtrat sur le premier substrat ainsi enduit.

Les adhésifs thermofusibles (souvent désignés sous l'appellation anglaise de "Hot Melt adhesives" ou "HM") sont des substances solides à température ambiante qui ne contiennent ni eau ni solvant. Appliqués à l'état fondu, ils se solidifient lors du refroidissement formant ainsi très rapidement un joint qui assure la cohésion des substrats (ou films) à lier dans le complexe.

Selon le procédé d'enduction décrit par la demande WO 96/25902 (souvent désigné par l'appellation d'enduction en rideau ou par les termes anglais de "curtain coating") la composition thermoplastique, rendue coulable à une température appropriée, est produite sous la forme d'un film continu par un dispositif d'enduction, par exemple une buse à lèvre (ou fente), qui n'est pas au contact du substrat à enduire. Le film continu (en forme de rideau) ainsi produit parcourt donc dans l'air une certaine distance, allant de 0,5 millimètre à environ 20 millimètres, avant de venir se déposer sur le substrat à enduire.

La demande WO 99/28048 décrit dans un mode de réalisation un perfectionnement du procédé de la demande précédente consistant dans l'application d'une pression sur la couche de composition thermoplastique revêtant le substrat, exercée au moyen d'un rouleau dont l'enveloppe est pourvue d'un revêtement antiadhésif.

Toutefois, les colles effectivement enseignées par ces 2 dernières demandes sont mises en oeuvre avec une productivité en substrat enduit qui ne dépasse pas 70 m/minute.

L'invention a pour but de proposer un film complexe comprenant une couche substantiellement continue d'épaisseur inférieure à 10 µm d'un adhésif de type autre que polyuréthanne, et offrant une qualité de cohésion de même niveau, ledit film complexe pouvant en outre être fabriqué par un procédé comprenant une étape d'enduction et assurant une vitesse de ligne d'au moins 100 m/minute.

Un autre but de la présente invention est de proposer un film composite comprenant une colle de complexage qui ne mette pas en oeuvre de polyuréthanne réactif et s'affranchisse par conséquent des contraintes toxicologiques correspondantes.

Un autre but de la présente invention est de proposer un film composite comprenant une colle de complexage qui permette la création d'une jonction entre au moins 2 couches dudit film sans réaction de réticulation.

Un autre but de la présente invention est de proposer un film composite comprenant une colle de complexage qui permette, durant la fabrication dudit film, l'opération de découpe d'une bobine mère en bobine filles à la suite immédiate de l'étape de complexage.

La présente invention a pour objet un film multicouche (ou complexe) comprenant au moins 2 couches minces de matériau liées entre elles par une couche, d'épaisseur ne dépassant pas 10 µm, d'une composition adhésive comprenant :
- de 30 à 70 % d'un mélange de copolymères blocs styréniques consistant de:
   - 5 à 75 % d'un copolymère tribloc choisi dans le groupe comprenant les SIS, SIBS, SBS, SEBS et SEPS, et de
   - 25 à 95 % d'un copolymère dibloc choisi dans le groupe comprenant les SI, SBI, SIB, SB, SEB, SEP,
   la teneur en motifs styréniques globale dudit mélange étant comprise entre 10 et 40 % ; et
- de 30 à 70 % d'une ou plusieurs résines tackifiantes.

En l'absence d'indications contraires, les pourcentages utilisés dans le présent texte pour exprimer des quantités correspondent à des pourcentages poids/poids.

Les copolymères blocs styréniques sont constitués de différents monomères polymérisés, incluant au moins un bloc polystyrène, et sont préparés par des techniques de polymérisation radicalaire. Les copolymères tribloc incluent 2 blocs polystyrène et un bloc élastomère. Ils peuvent revêtir des structures diverses : linéaire, en étoile (également dénommée radiale), branchée ou encore en peigne. Les copolymères dibloc incluent 1 bloc polystyrène et 1 bloc élastomère.

Il a à présent été trouvé que cette composition adhésive est particulièrement adaptée à la mise en oeuvre du procédé d'enduction de type rideau, tel que décrit par la demande WO 99/28048, dans le cas d'un substrat à enduire défilant en continu à une vitesse de ligne supérieure ou égale à 100 m/minute.

En effet, on utilise généralement comme dispositif d'enduction pour un tel procédé une buse à lèvre, dans laquelle l'ouverture a une forme rectangulaire de fente dont le grand côté (ou largeur) correspond à la laize du substrat à enduire (pouvant aller jusqu'à environ 2 m), et dont le petit côté (ou hauteur) peut mesurer selon le cas de 100 à 1000 µm. Cette fente est maintenue à une distance appropriée du substrat à enduire, généralement comprise entre 0,5 et 20 mm.

Après chauffage à une température comprise entre 140 et 210 °C, et extrusion à travers la buse d'enduction à une pression pouvant aller de 30 à 200 bars, de préférence de 50 à 100 bars, la composition adhésive (telle que définie précédemment) présente l'avantage de convenir à sa production en ligne sous la forme d'une couche continue dont l'épaisseur à la sortie de la buse, correspondant à la hauteur de la fente, peut varier de 100 à 1000 µm et qui est progressivement étirée dans l'air, sur une distance de 0,5 à 20 mm, de manière à amener ladite épaisseur à une valeur inférieure à 10 µm en un point au voisinage duquel ladite couche vient au contact du substrat à enduire, lequel est déplacé à une vitesse de ligne supérieure ou égale à 100 m/minute par des moyens d'entraînement appropriés.

Cette composition adhésive permet de plus l'obtention, sans les inconvénients des colles de type polyuréthane, de films complexes présentant une qualité de cohésion de même niveau qu'avec celles-ci. Ainsi, il est possible de procéder à l'étape de découpe en ligne des bobines mères en bobines filles immédiatement après l'étape de complexage. De plus, ces films complexes sont particulièrement adaptés à une utilisation dans le domaine de l'emballage flexible alimentaire, au moins du fait de l'absence du risque lié à la présence d'amines primaires aromatiques toxiques.

Les copolymères blocs styréniques utilisables dans la composition adhésive comprise dans le film complexe selon l'invention ont une masse molaire moyenne en poids Mw généralement comprise entre 50 kDa et 500 kDa et sont constitués de blocs de différents monomères polymérisés. Les copolymères tri-bloc ont pour formule générale :

ABA (I)

dans laquelle :
- A représente un bloc non élastomère styrénique (ou polystyrène), et
- B représente un bloc élastomère qui peut être :
- le polyisoprène : le copolymère bloc a alors pour structure :
   polystyrène-polyisoprène-polystyrène, et pour dénomination : SIS ;
- le polyisoprène suivi d'un bloc polybutadiène : le copolymère bloc a alors pour structure : polystyrène-polyisoprène-polybutadiène-polystyrène, et pour dénomination : SIBS
- le polybutadiène : le copolymère bloc a alors pour structure :
   polystyrène- polybutadiène- polystyrène, et pour dénomination : SBS
- le polybutadiène hydrogéné totalement ou en partie : le copolymère bloc a alors pour structure: polystyrène-poly(éthylènebutylène)- polystyrène et pour dénomination : SEBS.
- le polyisoprène hydrogéné totalement ou en partie : le copolymère bloc a alors pour structure : polystyrène-poly(éthylènepropylène)- polystyrène et pour dénomination : SEPS ;

Les copolymères di-bloc ont pour formule générale :

A-B (II)

dans laquelle A et B sont tels que définis précédemment.

Lorsque la composition adhésive comprend plusieurs copolymères styréniques triblocs, ces derniers étant choisis dans le groupe comprenant les SIS, les SBS, les SEPS, les SIBS, les SEBS , il est bien entendu que lesdits triblocs peuvent appartenir à une seule ou à plusieurs de ces 5 familles de copolymères.

On préfère utiliser un mélange d'un copolymère tribloc et d'un copolymère dibloc ayant le même bloc élastomère, en raison notamment du fait que de tels mélanges sont disponibles commercialement.

Selon une autre variante préférée, la teneur en copolymère dibloc dans le mélange de copolymères blocs styréniques est comprise entre 50 et 95 %.

Les copolymères triblocs compris dans la composition adhésive ont de préférence une structure linéaire, car ils permettent avantageusement l'obtention d'une vitesse de ligne encore plus élevée.

On peut citer comme exemples de produits commerciaux ayant une structure linéaire :
- de SIS: le Kraton^{®} D1113 de la société Kraton (mélange comprenant 56% de dibloc SI, 44 % de tribloc SIS et ayant une teneur globale en motifs styréniques de 16%) ;
- de SIBS : le Kraton^{®} MD 6465 (56% de di-bloc et 16% de styrène)
- de SBS : le Kraton^{®} D1118 (78% de di-bloc et 33% de styrène) ;
- de SEBS : le Kraton^{®} G1726 (70% de di-bloc et 30 % de styrène).

On peut citer comme exemples de produits commerciaux ayant une structure radiale :
- de SIS : le Vector^{®} 4230 de la société ExxonMobil (30 % de dibloc et 20 % de styrène).

La ou les résines tackifiantes utilisables dans la composition adhésive comprise dans le film complexe selon l'invention ont des masses molaires moyennes en poids M_{w} généralement comprises entre 300 et 5000 Da et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

On préfère utiliser des résines tackifiantes appartenant aux catégories (ii) ou (iii) pour lesquelles on peut citer comme exemples de résine disponible commercialement :
(ii) l'Escorez^{®} 1310 LC disponible auprès de Exxon Chemicals qui est une résine obtenue par polymérisation d'un mélange d'hydrocarbures aliphatiques insaturés ayant environ 5 atomes de carbone, et qui possède une température de ramolissement de 94°C et un Mw d'environ 1800 Da ; l'Escorez^{®} 5400 également de la société Exxon Chemicals qui est une résine obtenue par polymérisation, puis hydrogénation d'un mélange d'hydrocarbures aliphatiques insaturés ayant environ 9 ou 10 atomes de carbone et qui possède une température de ramolissement de 100°C et un Mw d'environ 570 Da ;
(iii) la Sylvarès^{®} TR7115 disponible auprès de Arizona Chemicals qui une résine terpène ayant une température de ramollissement de 115°C et un Mw d'environ 1040 Da.

La composition adhésive peut également comprendre de 0,1 à 2 % d'un ou plusieurs stabilisants (ou anti-oxydant). Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox^{®} 1010 de CIBA. Les anti-oxydants primaires peuvent être utilisés seuls ou en combinaison avec d'autres anti-oxydants tels que des phosphites comme l'Irgafos^{®} 168 également de CIBA, ou encore avec des stabilisants UV tels que des amines.

La composition adhésive peut également comprendre un plastifiant, mais dans une quantité ne dépassant pas 5 %. On peut utiliser comme plastifiant une huile paraffinique et naphténique (comme le Primol^{®} 352 de la société ESSO) comprenant éventuellement des composés aromatiques (comme le Nyflex 222B).

Selon une variante préférée, la composition adhésive ne comprend pas de plastifiant.

Selon une autre variante préférée, la composition adhésive comprend de 35 à 65 % du mélange des copolymères tribloc et dibloc et de 35 à 65 % de résine(s) tackifiante(s).

Selon un mode de réalisation tout particulièrement préféré, on utilise comme copolymère bloc styrénique un SIS de structure linéaire en mélange avec le dibloc SI.

On préfère enfin mettre en oeuvre dans le film multicouche (ou complexe) selon l'invention une composition adhésive ayant une viscosité Brookfield mesurée à 190°C supérieure à 5000 cP, de préférence supérieure à 10000 cP.

La composition adhésive est préparée par simple mélange des ingrédients à chaud, entre 150 et 200°C, au moyen d'un mélangeur à pales ou bien d'une extrudeuse à 2 vis.

Le film complexe selon invention comprend la composition adhésive telle que décrite précédemment sous la forme d'une couche continue d'épaisseur inférieure ou égale à 5 µm, et encore plus préférentiellement comprise entre 1 et 5 µm.

La couche de composition adhésive permet d'assurer la cohésion entre deux couches minces de matériau dont l'épaisseur peut varier de 5 à 150 µm.

Les matériaux sont généralement choisis parmi le papier, l'aluminium ou les polymères thermoplastiques tels que : le polyéthylène (ou PE), le polypropylène (ou PP), orienté ou non, les copolymères d'éthylène et d'acétate de vinyle (ou EVA), le polyester, le polyamide.

Le film complexe selon l'invention peut comprendre plusieurs couches des matériaux précédents, et également plusieurs couches adhésives de la composition telle que définie précédemment. Son épaisseur totale est susceptible de varier dans un large domaine allant de 20 à 400 µm.

Selon un mode de réalisation préféré, une des 2 couches minces comprises dans le film multicouche selon l'invention est constituée d'un matériau transparent et porte sur au moins une partie de la face qui est au contact de la couche de composition adhésive un dépôt d'encres, à des fins d'informations concernant le produit emballé. Ce dépôt d'encres est effectué par un procédé d'impression approprié sur la couche mince transparente, préalablement à son complexage. Il est avantageusement protégé de l'extérieur par la couche mince transparente. Le matériau transparent est par exemple du polyester ou du polypropylène. Les encres utilisées sont généralement des dispersions dans une phase continue, organique ou minérale, de pigments insolubles, organiques ou minéraux, très finement divisés.

L'invention concerne également un procédé de préparation en continu du film multicouche selon l'invention, comprenant :
(i) une étape d'enduction par la composition adhésive telle que définie précédemment d'une première couche mince de matériau, dans laquelle ladite composition, rendue coulable par chauffage à une température appropriée, est extrudée par un dispositif d'enduction sans contact avec ladite couche mince, sous la forme d'une couche substantiellement continue, qui est ensuite mise en contact avec la surface de ladite couche mince, puis
(ii) une étape de contrecollage d'une seconde couche mince, sur la première couche mince enduite conformément à l'étape (i).

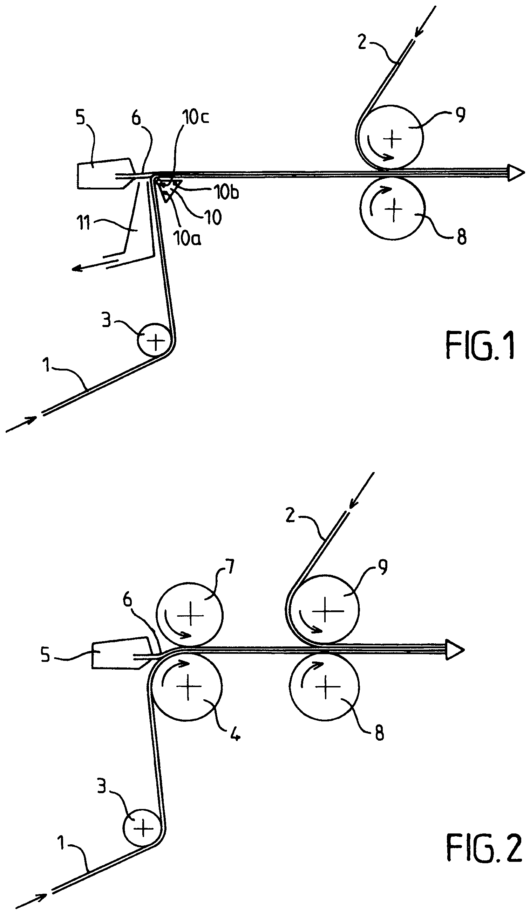

Les figures 1 et 2 décrivent schématiquement 2 modes de réalisation du procédé de complexage selon l'invention et auxquelles il est fait référence ci-dessous.

La couche mince 1 se présente sous la forme d'un film qui est conditionné par enroulements dans une bobine (non représentée sur la figure) dont la largeur correspond à la laize dudit film et qui est mise en rotation par des moyens d'entraînements (également non représentés) de manière à communiquer audit film une certaine vitesse de défilement, dans le sens indiqué par la flèche, pouvant aller jusqu'à 450 m/minute, voire plus.

Le film (ou couche mince) 1 est amené par les rouleaux de guidage 3 et/ou 4 au voisinage du dispositif d'enduction 5 dont il reste séparé par une distance comprise entre 0,5 et 20 mm, de préférence entre 0,5 et 2 mm. Le dispositif d'enduction est avantageusement une buse à fente (également dénommée "à lèvre") dont la fente a une forme rectangulaire dont le grand côté (ou largeur) correspond à la laize du film 1 à enduire (pouvant aller jusqu'à environ 2 m), et dont le petit côté (ou hauteur) peut mesurer de 100 à 1000 µm.

La température à laquelle la composition adhésive est rendue coulable peut varier de 140 à 210° C, et est obtenue par des moyens de chauffage de ladite composition placée selon le cas dans un bac fondoir ou une extrudeuse.

La couche substantiellement continue 6 de composition adhésive possède à la sortie de la fente de la buse à lèvre une épaisseur qui correspond sensiblement à la hauteur de la fente, soit une épaisseur pouvant varier de 100 à 1000 µm. En régime permanent de fonctionnement, ladite couche se déplace en suspension dans l'air sur la distance qui sépare sa mise en contact avec le film 1 à enduire et le dispositif d'enduction 5.

En régime permanent la couche substantiellement continue de composition adhésive 6 est, sous l'effet de la force résultant du défilement du film, étirée de telle sorte que son épaisseur comprise entre 100 et 1000 µm à la sortie de la buse est amenée, au voisinage de sa mise en contact avec le film 1, à une épaisseur inférieure à 10 µm, voire à 5 µm. Cette différence d'épaisseur n'est pas représentée sur les figures 1 et 2.

Selon un premier mode de réalisation, illustré par la figure 1, de l'étape d'enduction (i) du procédé selon l'invention, la couche substantiellement continue 6 de composition adhésive extrudée par le dispositif d'enduction 5 :
(a) traverse l'espace entre ledit dispositif et le film 1, en suspension dans de l'air dont la pression est abaissée localement à une valeur comprise entre 500 et 975 mbars, de préférence entre 750 et 900 mbars, puis
(b) est mise en contact avec le film 1 au voisinage de l'arête 10c formée par les 2 surfaces de guidage 10a et 10b d'un élément de renvoi 10 qui est traversé par un conduit d'air comprimé (non représenté sur la figure) débouchant par au moins une ouverture de sortie dans la zone de l'arête 10c, de telle sorte que l'air comprimé refoulé forme un coussin d'air autour de ladite arête. Le coussin d'air réduit avantageusement la friction entre l'arête 10c et le film 1 durant le défilement à grande vitesse de ce dernier.

L'abaissement de la pression atmosphérique au voisinage de la couche 6 en suspension dans l'air est obtenue avantageusement par une boîte à vide 11 ayant la géométrie appropriée, qui est reliée à une source de vide (non représentée sur la figure 1).

Les 2 surfaces de guidage 10a et 10b de l'élément de renvoi 10 sont adaptées au guidage du film 1 et à la modification de sa direction de transport, comme indiqué sur la figure 1. Le film 1 passe le long de la surface de guidage d'amenée 10a de l'élément de renvoi 10, sa direction de transport étant radicalement modifiée par l'arête 10c, et passe ensuite le long de la surface de guidage d'évacuation 10b, dans le sens de la flèche. Un coussin d'air se trouve entre le film 1 et l'élément de renvoi 10, les 2 surfaces 10a et 10b étant configurées comme des surfaces à coussin d'air.

La combinaison de l'abaissement de la pression atmosphérique et de l'élément de renvoi 10 est particulièrement avantageuse, car elle évite l'inclusion d'air entre la couche 6 de composition adhésive et le film 1, inclusion qui peut se révéler particulièrement gênante pour des vitesses de défilement du film élevées, et notamment supérieures à 450 m/minute.

Il est fait référence pour la description dudit élément de renvoi 10 à la demande internationale WO 2005/099911.

Selon un second mode de réalisation de l'étape (i) d'enduction du procédé selon l'invention, illustré par la figure 2, la couche substantiellement continue 6 de composition adhésive extrudée par le dispositif d'enduction 5 est, après sa mise en contact avec le film 1, pressée sur ce dernier par un rouleau 7 dont l'enveloppe est pourvue d'un revêtement antiadhésif, par exemple à base de polytétrafluoroéthylène. Ledit rouleau 7 exerce avec le rouleau 4 une pression sur la couche adhésive déposée sur le film 1, et évite ainsi le piégeage d'air entre ledit film et la couche adhésive pour des vitesses de défilement du film élevées, notamment supérieures à 100 m/minute, voire à 450 m/minute.

Il est expressément fait référence pour la description de ce second mode de réalisation à la demande WO 99/28048 pré-citée.

L'étape (i) d'enduction comprise dans le procédé selon l'invention est suivie d'une étape (ii) de contrecollage d'une seconde couche mince 2 de matériau sur la première couche mince 1 revêtue de la couche substantiellement continue de composition adhésive 6. Cette seconde couche mince 2 se présente également sous la forme d'un film qui est aussi avantageusement conditionné comme le premier sous forme de bobine ; elle est composée d'un matériau identique ou différent de celui utilisé pour la première couche mince 1. Le contrecollage est réalisé par application d'une pression exercée par les rouleaux 8 et 9.

On obtient ainsi avantageusement 2 couches minces de matériau liées par une couche de composition adhésive, l'ensemble étant compris dans le film complexe selon l'invention, tel que défini précédemment. Ce film complexe est également conditionné en bobine.

Les films complexes selon l'invention sont utilisables pour la fabrication d'emballages flexibles les plus divers qui sont mis en forme puis fermés (après l'étape de conditionnement du produit destiné au consommateur) par des techniques de thermoscellage (ou thermosoudage).

### Test de pelage à 180° :

La cohésion du film composite selon l'invention est évaluée par le test de pelage à 180° tel que décrit dans la norme française NF T 54-122. Le principe de ce test consiste en la détermination de la force nécessaire à la séparation (ou pelage) de 2 couches individuelles de films liées par l'adhésif.

Une éprouvette de forme rectangulaire de 1,5 cm de large et d'environ 10 cm de long est découpée dans le film complexe. On décolle à partir de l'extrémité de cette éprouvette, et sur environ 2 cm, les 2 couches individuelles de film comprises dans cette bande et les 2 extrémités libres obtenues sont fixées sur deux dispositifs d' attache reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des 2 couches dont les extrémités décollées se déplacent progressivement selon un axe vertical en formant un angle de 180°, la partie fixe -reliée à un dynamomètre- mesure la force supportée par l'éprouvette ainsi maintenue.

Le résultat est exprimé en N/cm. Le test de pelage à 180° conduit, pour un film complexe à base de colle polyuréthanne, à une valeur habituellement comprise entre 0,2 et 7 N/cm.

### Test de pelage à 180° sur film thermosoudé :

Le thermosoudage consiste à assembler deux parties du film complexe thermoplastique, en les portant à une température susceptible de varier d'environ 120 à 250°C au moyen des éléments chauffants d'une thermoscelleuse (appelés mâchoires), puis à les presser l'une contre l'autre, de manière à permettre le mouvement des macromolécules de l'une vers l'autre et leur enchevêtrement. Cette opération, qui assure l'interpénétration entre les 2 couches individuelles du film complexe ainsi mises en contact, et sur une partie seulement de leur épaisseur, ne doit pas porter atteinte à la qualité de la cohésion dudit film sur la partie thermosoudée.

Le principe de ce test consiste donc en la détermination de la force nécessaire à la séparation (ou pelage) de 2 couches individuelles du film liées par l'adhésif, sur une partie thermosoudée dudit film.

On découpe dans le film complexe un rectangle d'environ 10 cm de long sur 4 cm de large que l'on plie selon sa plus grande médiane. Les branches de part et d'autre de la pliure sont thermosoudées à une température de 140°C et sous une pression de 2,5 bar, de manière à former une zone thermosoudée de 1 cm de large et 10 cm de long, en utilisant pour cela une thermoscelleuse à mâchoires lisses. On obtient ensuite par simple découpe une bande rectangulaire de 1,5 cm sur 2 cm comprenant les 2 films composites assemblés selon une zone thermosoudée de 1,5 cm sur 1 cm, en laissant une zone de 1,5 cm sur 1 cm où les 2 branches de films restent libres, liées seulement par la zone thermosoudée.

On décolle sur environ 1 cm les 2 couches individuelles de film complexe comprises dans une des 2 branches de film restées libres, jusqu'à atteindre le début de la zone thermosoudée. Les 2 extrémités libres obtenues sont alors fixées sur les deux dispositifs d' attache, respectivement fixe et mobile de l'appareil de traction décrit précédemment, et l'on procède ensuite au pelage à 180° comme pour le test précédent.

Le résultat conduit habituellement à une valeur, pour un film complexe à base de colle polyuréthanne, qui est également comprise entre 0,2 et 7 N/cm et qui est supérieure ou égale à la valeur obtenue par le test précédent, pour un film non thermosoudé.

Les exemples suivants sont donnés à titre purement illustratif de l'invention et ne sauraient en aucun cas être interprétés pour en limiter la portée.

### Exemple 1 :

La composition adhésive indiquée dans le tableau 1 suivant est préparée par simple mélange à chaud des ingrédients à 170°C, au moyen d'une extrudeuse à 2 vis.

On mesure pour cette composition une viscosité Brookfield à 190°C supérieure à 200000 mPa.s.

Le MFI mesuré à 190°C est de 50 g/10 minutes. Le MFI (ou Melt Flow Index) est la masse de composition placée dans un cylindre vertical qui s'écoule en 10 minutes au travers d'une filière de diamètre fixé, sous l'effet d'une pression exercée par un piston chargé ayant un poids total de 2,16 kg, conformément à la norme ISO 1133.

Cette composition adhésive est utilisée pour la fabrication d'un film composite comprenant 2 couches constituées chacune d'un film de polypropylène orienté d'épaisseur 20 µm et liées entre elles par une couche de ladite composition qui a pour épaisseur environ 2 µm.

On utilise pour fabriquer ce film une machine de complexage dont la structure correspond schématiquement au dispositif représenté sur la figure 1. Les 2 films de polypropylène orienté sont conditionnés en bobine de 30 cm de laize. La bobine de polypropylène à enduire est actionnée par un moteur permettant de communiquer au substrat une vitesse de défilement allant jusqu'à 600 m / minute. Le dispositif d'enduction 5 comprend une buse à lèvre commercialisée par la société NORDSON sous la référence BC 70, dont la fente a la forme d'un rectangle qui a pour longueur 30 cm et pour hauteur 600 µm. Cette buse est placée à 1 mm du substrat en couche mince à enduire.

Les surfaces de guidage 10a et 10b de l'élément de renvoi 10 forment un angle d'environ 60°. La pression créée au voisinage du film continu de composition adhésive 6 entre le dispositif d'enduction 5 et le film 1 est maintenu entre 750 et 900 mbar au moyen de la boîte à vide 11.

La composition adhésive est extrudée par la buse à lèvre à la température d'extrusion indiquée dans le tableau 1 et à une pression comprise entre 70 et 90 bars. Le contrecollage du film 2 sur le film 1 ainsi enduit est réalisé au moyen des rouleaux 8 et 9.

On communique au film de polypropylène à enduire une vitesse de défilement de 100 m/minute. On obtient en sortie de buse, après établissement du régime permanent, un film continu et cohésif 6 de composition adhésive assurant la production du film bicouche.

On porte ensuite la vitesse de défilement à une valeur de 300 m/minute, puis à une valeur de 500 m /minute en obtenant le même résultat que pour la vitesse de défilement de 100 m/minute.

On indique dans le tableau 1 comme valeur de vitesse maximale de défilement du film la valeur de 500 m /minute, c'est-à-dire la vitesse maximale pour laquelle on obtient en sortie de buse un film continu et cohésif 6 de composition adhésive. Ce film 6 conduit au dépôt sur le film 1 d'une couche d'épaisseur d'environ 2 µm (correspondant à un grammage d'environ 2 g/m²)_{.}

La cohésion du film composite ainsi obtenu est évaluée par les tests de pelage à 180° effectués sur film non thermosoudé et sur film thermosoudé. Les résultats, indiqués dans le tableau 1, montrent une qualité de cohésion de même niveau qu'avec les colles de type polyuréthane.

### Exemples 2 et 3 :

On répète l'exemple 1 en utilisant les compositions indiquées dans le tableau 1 dont les ingrédients sont mélangés au moyen d'un mélangeur à pales.

Les résultats obtenus sont également indiqués dans le tableau 1.

### Exemple 4 :

On répète l'exemple 1 en utilisant la composition indiquée dans le tableau 1.

Les résultats obtenus sont également indiqués dans le tableau 1.

Le MFI mesuré à 190°C est de 60 g/10 minutes.

S'agissant de la vitesse maximale de défilement, on observe à la vitesse de 300 m/minute l'impossibilité d'obtenir en sortie de buse un film continu et cohésif 6 de composition adhésive.

### Exemple 5 :

On répète les exemples 2 et 3 en utilisant la composition indiquée dans le tableau 1.

Les résultats obtenus sont également indiqués dans le tableau 1. On obtient comme pour l'exemple 4 une vitesse maximale de défilement de 100 m/minute.

### Exemple 6 :

On répète les exemples 1 à 5 en utilisant une machine de complexage dont la structure correspond schématiquement au dispositif représenté sur la figure 2.

Les 2 films de polypropylène orienté sont conditionnés en bobine de 30 cm de laize. La bobine de polypropylène à enduire est actionnée par un moteur permettant de communiquer au substrat une vitesse de défilement allant jusqu'à 600 m / minute. Le dispositif d'enduction 5 comprend une buse à lèvre commercialisée par la société NORDSON sous la référence BC 70, dont la fente a la forme d'un rectangle qui a pour longueur 30 cm et pour hauteur 600 µm. Cette buse est placée à 1 mm du substrat en couche mince à enduire.

La composition adhésive est extrudée par la buse à lèvre à la température d'extrusion indiquée dans le tableau 1 et à une pression comprise entre 70 et 90 bars.

Le film continu et cohésif 6 de composition adhésive conduit également au dépôt sur le film 1 d'une couche d'épaisseur d'environ 2 µm (correspondant à un grammage d'environ 2 g/m²) qui est pressée sur ledit film 1 au moyen du rouleau 7, muni sur son enveloppe d'un revêtement antiadhésif consistant en du polytétrafluoroéthylène.

Le contrecollage du film 2 sur le film 1 ainsi enduit est réalisé au moyen des rouleaux 8 et 9.

On obtient sensiblement les mêmes résultats que ceux indiqués dans le tableau 1 pour la vitesse maximale de défilement ainsi que pour les tests de pelage à 180° effectués sur film non thermosoudé et sur film thermosoudé.

**Tableau 1**

| Ingrédient | Teneur en % | | | | |
|---|---|---|---|---|---|
| | Exemple 1 | Exemple 2 | Exemple 3 | Exemple 4 | Exemple 5 |
| Kraton^{®} D1113 | 59,7 | 43,5 | 40 | - | - |
| Vector^{®} 4230 | - | - | - | 59,7 | 40 |
| Sylvarès^{®} TR7115 | 14,9 | - | 22,2 | 14,9 | 22,2 |
| Escorez^{®} 1310 LC | 24,9 | - | 37,3 | 24,9 | 37,3 |
| Escorez^{®} 5400 | - | 56 | - | - | - |
| Irganox^{®} 1010 | 0,5 | 0,5 | 0,5 | 0,5 | 0,5 |
| | | | | | |
| Température d'extrusion (°C) | 200 | 145 | 195 | 200 | 170 |
| Viscosité Brookfield mesurée à 190°C (mPa.s) | > 200 000 | 20 000 | 43 000 | > 200 000 | 14 000 |
| Vitesse maximale de défilement (m/minute) | 500 | 500 | 500 | 100 | 100 |
| Pelage à 180° sur film non thermosoudé (N/cm) | 1 | 0,8 | 1,1 | 0,8 | 1,1 |
| Pelage à 180° sur film thermosoudé (N/cm) | 1,8 | 1,5 | 1,6 | 1,7 | 1,8 |

## Revendications

1. Film multicouche comprenant au moins 2 couches minces de matériau liées entre elles par une couche, d'épaisseur inférieure ou égale à 5 µm, d'une composition adhésive comprenant :
- de 30 à 70 % d'un mélange de copolymères blocs styréniques consistant de:
- 5 à 75 % d'un copolymère tribloc choisi dans le groupe comprenant les SIS, SIBS, SBS, SEBS et SEPS, et de
- 25 à 95 % d'un copolymère dibloc choisi dans le groupe comprenant les SI, SBI, SIB, SB, SEB, SEP,
la teneur en motifs styréniques globale dudit mélange étant comprise entre 10 et 40 % ; et
- de 30 à 70 % d'une ou plusieurs résines tackifiantes ;
ladite composition adhésive ayant une viscosité Brookfield mesurée à 190°C supérieure à 5000 cP.

2. Film multicouche selon la revendication 1, **caractérisé en ce que** les tribloc et dibloc présents dans le mélange de copolymères blocs styréniques ont le même bloc élastomère.

3. Film multicouche selon l'une des revendications 1 ou 2, **caractérisé en ce que** les copolymères triblocs compris dans la composition adhésive ont une structure linéaire.

4. Film multicouche selon l'une des revendications 1 à 3, **caractérisé en ce que** les résines tackifiantes utilisables dans la composition adhésive ont des masses molaires moyennes en poids M_{w} comprises entre 300 et 5000 Da et sont choisies parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

5. Film multicouche selon la revendication 4, **caractérisé en ce que** les résines tackifiantes utilisable dans la composition adhésive appartiennent aux catégories (ii) ou (iii).

6. Film multicouche selon l'une des revendications 1 à 5, **caractérisé en ce que** la composition adhésive comprend de 35 à 65 % du mélange des copolymères tribloc et dibloc et de 35 à 65 % de résine(s) tackifiante(s).

7. Film multicouche selon l'une des revendications 1 à 6, **caractérisé en ce que** l'on utilise comme copolymère bloc styrénique un SIS de structure linéaire en mélange avec le dibloc SI.

8. Film multicouche selon l'une des revendications 1 à 7, **caractérisé en ce que** l'épaisseur de la couche de composition adhésive est comprise entre 1 et 5 µm

9. Film multicouche selon l'une des revendications 1 à 8, **caractérisé en ce que** les couches minces de matériau ont une épaisseur variant de 5 à 150 µm

10. Film multicouche selon l'une des revendications 1 à 9, **caractérisé en ce que** les matériaux utilisables pour les couches minces liées entre elles sont choisis parmi le papier, l'aluminium ou les polymères thermoplastiques.

11. Film multicouche selon l'une des revendications 1 à 10, **caractérisé en ce que** une des 2 couches minces est constituée d'un matériau transparent et porte, sur au moins une partie de la face qui est au contact de la couche de composition adhésive, un dépôt d'encres.

12. Procédé de préparation en continu du film multicouche tel que défini dans l'une des revendications 1 à 11, comprenant :
(i) une étape d'enduction par la composition adhésive d'une première couche mince de matériau, dans laquelle ladite composition, rendue coulable par chauffage à une température appropriée, est extrudée par un dispositif d'enduction sans contact avec ladite couche mince, sous la forme d'une couche substantiellement continue, qui est ensuite mise en contact avec la surface de ladite couche mince, puis
(ii) une étape de contrecollage d'une seconde couche mince, sur la première couche mince enduite conformément à l'étape (i).

13. Procédé selon la revendication 12, **caractérisé en ce que**, dans l'étape d'enduction (i), la couche substantiellement continue (6) de composition adhésive extrudée par le dispositif d'enduction (5) :
(a) traverse l'espace entre ledit dispositif et le film (1), en suspension dans de l'air dont la pression est abaissée localement à une valeur comprise entre 500 et 975 mbars, de préférence entre 750 et 900 mbars, puis
(b) est mise en contact avec le film (1) au voisinage de l'arête (10c) formée par les 2 surfaces de guidage (10a) et (10b) d'un élément de renvoi (10) qui est traversé par un conduit d'air comprimé débouchant par au moins une ouverture de sortie dans la zone de l'arête (10c), de telle sorte que l'air comprimé refoulé forme un coussin d'air autour de ladite arête.

14. Procédé selon la revendication 12, **caractérisé en ce que**, dans l'étape (i) d'enduction, la couche substantiellement continue (6) de composition adhésive extrudée par le dispositif d'enduction (5) est, après sa mise en contact avec le film (1), pressée sur ce dernier par un rouleau (7) dont l'enveloppe est pourvue d'un revêtement antiadhésif.

15. Utilisation du film selon l'une des revendications 1 à 11 pour la fabrication d'emballages flexibles.

## Patentansprüche

1. Mehrschichtfolie, umfassend mindestens 2 dünne Materialschichten, die durch eine Schicht mit einer Dicke kleiner gleich 5 µm aus einer Klebstoffzusammensetzung, umfassend:
- 30 bis 70 % einer Mischung von Styrolblockcopolymeren, die aus:
- 5 bis 75 % eines Dreiblockcopolymers aus der Gruppe umfassend SIS, SIBS, SBS, SEBS und SEPS und
- 25 bis 95 % eines Zweiblockcopolymers aus der Gruppe umfassend SI, SBI, SIB, SB, SEB, SEP
besteht, wobei der Gesamtgehalt der Mischung an Styrol-Einheiten zwischen 10 und 40% liegt; und
- 30 bis 70 % eines oder mehrerer Klebrigmacherharze;
miteinander verbunden sind, wobei die Klebstoffzusammensetzung eine bei 190°C gemessene Brookfield-Viskosität von mehr als 5000 cP aufweist.

2. Mehrschichtfolie nach Anspruch 1, **dadurch gekennzeichnet, dass** die in der Mischung von Styrolblockcopolymeren vorliegenden Dreiblöcke und Zweiblöcke den gleichen Elastomerblock aufweisen.

3. Mehrschichtfolie nach einem der Ansprüche 1 oder 2, **dadurch gekennzeichnet, dass** die Dreiblockcopolymere in der Klebstoffzusammensetzung eine lineare Struktur aufweisen.

4. Mehrschichtfolie nach einem der Ansprüche 1 bis 3, wobei die in der Klebstoffzusammensetzung verwendbaren Klebrigmacherharze gewichtsmittlere Molmassen M_{w} zwischen 300 und 5000 Da aufweisen und aus:
- (i) natürlichen oder modifiziertem Kolophoniumharzen, wie aus dem Gummi von Kiefern extrahiertem Kolophoniumharz, aus Baumwurzeln extrahiertem Holzkolophoniumharz, und hydrierten, dehydrierten, dimerisierten, polymerisierten oder mit Monoalkoholen oder Polyolen wie Glycerin veresterten Derivaten davon;
- (ii) durch Hydrierung, Polymerisation oder Copolymerisation (mit einem aromatischen Kohlenwasserstoff) von Mischungen von ungesättigten aliphatischen Kohlenwasserstoffen mit ungefähr 5, 9 oder 10 Kohlenstoffatomen, die aus Erdölfraktionen stammen, erhaltenen Harzen;
- (iii) gegebenenfalls durch Einwirkung von Phenolen modifizierten Terpenharzen, die im Allgemeinen bei der Polymerisation von Terpen-Kohlenwasserstoffen wie beispielsweise Monoterpen (oder Pinen) in Gegenwart von Friedel-Crafts-Katalysatoren anfallen; und
- (iv) Copolymeren auf Basis von natürlichen Terpenen, beispielsweise Styrol/Terpen, alpha-Methylstyrol/Terpen und Vinyltoluol/Terpen
ausgewählt sind.

5. Mehrschichtfolie nach Anspruch 4, **dadurch gekennzeichnet, dass** die in der Klebstoffzusammensetzung verwendbaren Klebrigmacherharze zu den Kategorien (ii) oder (iii) gehören.

6. Mehrschichtfolie nach einem der Ansprüche 1 bis 5, **dadurch gekennzeichnet, dass** die Klebstoffzusammensetzung 35 bis 65 % der Mischung von Dreiblock- und Zweiblockcopolymeren und 35 bis 65 % Klebrigmacherharz(e) umfasst.

7. Mehrschichtfolie nach einem der Ansprüche 1 bis 6, **dadurch gekennzeichnet, dass** als Styrolblockcopolymer ein SIS mit linearer Struktur in Abmischung mit dem SI-Zweiblock verwendet wird.

8. Mehrschichtfolie nach einem der Ansprüche 1 bis 7, **dadurch gekennzeichnet, dass** die Dicke der Schicht aus Klebstoffzusammensetzung zwischen 1 und 5 µm liegt.

9. Mehrschichtfolie nach einem der Ansprüche 1 bis 8, **dadurch gekennzeichnet, dass** die dünnen Materialschichten eine Dicke von 5 bis 150 µm aufweisen.

10. Mehrschichtfolie nach einem der Ansprüche 1 bis 9, **dadurch gekennzeichnet, dass** die für die miteinander verbundenen dünnen Schichten verwendbaren Materialien aus Papier, Aluminium oder thermoplastischen Polymeren ausgewählt sind.

11. Mehrschichtfolie nach einem der Ansprüche 1 bis 10, **dadurch gekennzeichnet, dass** eine der 2 dünnen Schichten aus einem transparenten Material besteht und auf mindestens einem Teil der mit der Schicht aus Klebstoffzusammensetzung in Kontakt stehenden Seite eine Tintenablagerung trägt.

12. Verfahren zur kontinuierlichen Herstellung der Mehrschichtfolie gemäß einem der Ansprüche 1 bis 11, bei dem man:
(i) eine erste dünne Materialschicht mit der Klebstoffzusammensetzung beschichtet, wobei die durch Erwärmen auf eine geeignete Temperatur fließfähig gemachte Zusammensetzung durch eine Beschichtungsvorrichtung ohne Kontakt mit der dünnen Schicht in Form einer weitgehend kontinuierlichen Schicht, die dann mit der Oberfläche der dünnen Schicht in Kontakt gebracht wird, extrudiert wird, und dann
(ii) auf die gemäß Schritt (i) beschichtete erste dünne Schicht eine zweite dünne Schicht aufkaschiert.

13. Verfahren nach Anspruch 12, **dadurch gekennzeichnet, dass** in dem Beschichtungsschritt (i) die durch die Beschichtungsvorrichtung (5) extrudierte weitgehend kontinuierliche Schicht (6) aus der Klebstoffzusammensetzung:
(a) den Raum zwischen der Vorrichtung und der Folie (1) in Luft, deren Druck lokal auf einen Wert zwischen 500 und 975 mbar, vorzugsweise zwischen 750 und 900 mbar, gesenkt wird, suspendiert durchläuft und dann
(b) die Folie (1) in Nachbarschaft der Kante (10c), die durch die zwei Führungsoberflächen (10a) und (10b) eines Umlenkelements (10) gebildet wird, durch welches eine Druckluftleitung läuft, die sich über mindestens eine Ausgangsöffnung in der Zone der Kante (10c) öffnet, so dass die aufgestaute Druckluft ein Luftkissen um die Kante bildet, in Kontakt gebracht wird.

14. Verfahren nach Anspruch 12, **dadurch gekennzeichnet, dass** in dem Beschichtungsschritt (i) die durch die Beschichtungsvorrichtung (5) extrudierte weitgehend kontinuierliche Schicht (6) nach dem Kontakt mit der Folie (1) durch eine Walze (7), deren Mantel mit einer Antihaftbeschichtung versehen ist, auf die Folie gedrückt wird.

15. Verwendung der Folie nach einem der Ansprüche 1 bis 11 zur Herstellung von flexiblen Verpackungen.

## Claims

1. Multilayer film comprising at least 2 thin layers of material joined together by a layer, having a thickness of less than or equal to 5 µm, of an adhesive composition comprising:
- from 30 to 70% of a blend of styrene block copolymers consisting of:
- 5 to 75% of a triblock copolymer chosen from the group comprising SIS, SIBS, SBS, SEBS and SEPS; and
- 25 to 95% of a diblock copolymer chosen from the group comprising SI, SBI, SIB, SB, SEB, SEP,
the overall content of styrene units of said blend being between 10 and 40%; and
- from 30 to 70% of one or more tackifying resins;
said adhesive composition having a Brookfield viscosity, measured at 190°C, of greater than 5000 cP.

2. Multilayer film according to Claim 1, **characterized in that** the triblocks and diblocks present in the blend of styrene block copolymers have the same elastomer block.

3. Multilayer film according to either of Claims 1 or 2, **characterized in that** the triblock copolymers included in the adhesive composition have a linear structure.

4. Multilayer film according to one of Claims 1 to 3, **characterized in that** the tackifying resins that can be used in the adhesive composition have weight-average molecular weights M_{w} between 300 and 5000 Da and are chosen from:
- (i) rosins of natural or modified origin, such as for example the rosin extracted from the gum of pine trees, the wood rosin extracted from the roots of the tree and derivatives thereof that are hydrogenated, dehydrogenated, dimerized, polymerized or esterified with monoalcohols or polyols such as glycerol;
- (ii) resins obtained by hydrogenation, polymerization or copolymerization (with an aromatic hydrocarbon) of mixtures of unsaturated aliphatic hydrocarbons having around 5, 9 or 10 carbon atoms resulting from oil cuts;
- (iii) terpene resins that generally result from the polymerization of terpene hydrocarbons such as for example monoterpene (or pinene) in the presence of Friedel-Crafts catalysts, optionally modified by the action of phenols; and
- (iv) copolymers based on natural terpenes, for example styrene/terpene, α-methylstyrene/terpene and vinyltoluene/ terpene.

5. Multilayer film according to Claim 4, **characterized in that** the tackifying resins that can be used in the adhesive composition belong to categories (ii) or (iii).

6. Multilayer film according to one of Claims 1 to 5, **characterized in that** the adhesive composition comprises from 35 to 65% of the blend of triblock and diblock copolymers and from 35 to 65% of tackifying resin(s).

7. Multilayer film according to one of Claims 1 to 6, **characterized in that** use is made, as a styrene block copolymer, of an SIS of linear structure as a blend with the SI diblock.

8. Multilayer film according to one of Claims 1 to 7, **characterized in that** the thickness of the layer of adhesive composition is between 1 and 5 µm.

9. Multilayer film according to one of Claims 1 to 8, **characterized in that** the thin layers of material have a thickness that varies from 5 to 150 µm.

10. Multilayer film according to one of Claims 1 to 9, **characterized in that** the materials that can be used for the thin layers that are joined together are chosen from paper, aluminium or thermoplastic polymers.

11. Multilayer film according to one of Claims 1 to 10, **characterized in that** one of the 2 thin layers is composed of a transparent material and bears, on at least one part of the face that is in contact with the layer of adhesive composition, a deposition of inks.

12. Method of continuously preparing the multilayer film as defined in one of Claims 1 to 11, comprising:
(i) a step of coating a first thin layer of material with the adhesive composition, in which said composition, rendered flowable by heating at an appropriate temperature, is extruded by a coating device without contact with said thin layer, in the form of a substantially continuous layer, which is then brought into contact with the surface of said thin layer; then
(ii) a step of laminating a second thin layer, onto the first thin layer coated in accordance with step (i).

13. Method according to Claim 12, **characterized in that**, in the coating step (i), the substantially continuous layer (6) of adhesive composition extruded by the coating device (5):
(a) crosses the space between said device and the film (1) suspended in air, the pressure of which is locally dropped to a value between 500 and 975 mbar, preferably between 750 and 900 mbar; then
(b) is brought into contact with the film (1) in the vicinity of the edge (10c) formed by the two guiding surfaces (10a) and (10b) of a deflecting element (10) through which a compressed air duct passes that opens via at least one outlet opening into the zone of the edge (10c), so that the compressed air forced back forms a cushion of air around said edge.

14. Method according to Claim 12, **characterized in that**, in the coating step (i), the substantially continuous layer (6) of adhesive composition extruded by the coating device (5) is, after it has come into contact with the film (1), pressed against the latter by a roll (7), the exterior of which is provided with a non-stick coating.

15. Use of the film according to one of Claims 1 to 11 for manufacturing flexible packaging.
